# EUROPEAN PATENT APPLICATION

(11) **EP 4 831 836 A1**
(43) Date of publication of application: **28.10.2026**
(21) Application number: 25171860.7
(22) Date of filing: 23.04.2025
(51) Int. Cl.: G06F 16/9032

(54) **METHOD FOR CONTEXT EXTRACTION DEFENSE IN A RETRIEVAL-AUGMENTED GENERATION ENHANCED LARGE LANGUAGE MODEL**

(71) Applicant: Robert Bosch GmbH, 70442 Stuttgart (DE)
(72) Inventor: Nicolae, Maria Irina, 70197 Stuttgart (DE); Eisele, Max Camillo, 71640 Ludwigsburg (DE); Zhuang, Zhixiong, 71272 Renningen (DE)

(57) **Abstract**

A computer-implemented method for defending context extraction in a large language model enhanced by retrieval-augmented generation, the method comprising: computing for an original context embedding an optimized proxy context embedding that: minimizes a difference between a response generated by the large language model to a regular query based on the original context embedding and a response generated by the large language model to the regular query on the basis of the optimized proxy context embedding, and maximizes a difference between a response generated by the large language model to an attack query based on the optimized proxy context embedding and an original context; and generating a response to an input query by the large language model on the basis of the optimized proxy context embedding.

## Description

The present disclosure relates to a method for context extraction defense in a retrieval-augmented generation enhanced large language model.

Retrieval-augmented generation (RAG) refers to an approach in large language models (LLMs) that integrates information retrieval with text generation. In this method, the model first retrieves relevant information from an external knowledge base or corpus, which is then used to inform and enhance the subsequent generation of the response. By combining retrieval-based techniques with generative capabilities, RAG improves the accuracy, relevance, and factuality of the model's output, particularly for tasks requiring specialized or up-to-date knowledge.

The present disclosure addresses the RAG setup where the contexts retrieved should be protected and not accessible to the RAG users. Typically, this can be required when the RAG enhanced LLM is provided externally as a service by a private or corporate entity. The RAG provider might use privacy-relevant or confidential information to ground the RAG generation phase in order to improve the overall performance of the system or service provided.

Existing RAG context extraction defenses predominantly focus on query manipulation, retrieval constraints, and system instructions. However, these approaches suffer from fundamental weaknesses. Adjusting query placement within the prompt or modifying retrieval thresholds often introduces instability, degrading response quality without guaranteeing robust protection. Similarly, system-level instructions that restrict content disclosure remain vulnerable to adversarial queries specifically crafted to override such constraints.

Given these shortcomings, a more resilient defense mechanism is needed to safeguard the knowledge base while preserving response quality and usability.

According to a first aspect of the present disclosure, this goal is achieved by means of a computer-implemented method for defending context extraction in a large language model enhanced by retrieval-augmented generation, the method comprising:
- computing for an original context embedding an optimized proxy context embedding that:
   - minimizes a difference between a response generated by the large language model to a regular query based on the original context embedding and a response generated by the large language model to the regular query on the basis of the optimized proxy context embedding, and
   - maximizes a difference between a response generated by the large language model to an attack query based on the optimized proxy context embedding and an original context, and
- generating a response to an input query by the large language model on the basis of the optimized proxy context embedding, i.e. without passing the original context or original context embedding to the large language model.

By minimizing a difference between a response generated by the large language model to a regular query based on the original context embedding and a response generated by the large language model to the regular query on the basis of the optimized proxy context embedding, the utility of the retrieval-augmented generation (RAG) enhanced large language model (LLM) is preserved. By maximizing the difference between a response generated by the large language model to an attack query based on the optimized proxy context embedding and the original context, original context extraction is prevented.

The computation of the optimized proxy context embedding can be performed by:
- minimizing a cross-entropy loss between a response generated by the large language model on the basis of an original context embedding to a predetermined set of queries that are representative of the intended usage of the original context and a response generated by the large language model on the basis of a proxy context embedding to said predetermined set of queries, and
- minimizing a cross-entropy loss between a response generated by the large language model on the basis of a proxy context embedding to a fixed query and a fixed target context.

For example, the optimized proxy context embedding can be computed by solving the following optimization problem: ${arg min}_{{{ϕ}^{˜}}_{C}} \left[\frac{1}{\left|ℚ\right|}{\sum }_{Q ∈ ℚ} L \left(f\left({ϕ}_{Q}, {ϕ}_{C}\right),f\left({ϕ}_{Q}, {{ϕ}^{˜}}_{C}\right)\right) + L \left(f\left({ϕ}_{Q ′}, {{ϕ}^{˜}}_{C}\right),{C}^{˜}\right)\right] .$

Here, *C* denotes the original context, 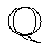 the predetermined set of queries, Q a query of the set of queries 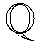 , *ϕ_{Q}* an embedding of the query *Q*, *ϕ_{C}* an embedding of the original context, *ϕ_{Q'}* an embedding of the fixed query *Q'*, *ϕ̃_{C}* a proxy context embedding, *C̃* the fixed target context, and 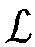 the cross-entropy loss.

The queries of the set of queries can be synthesized by means of the large language model using the original context as a reference. The fixed query is a proxy query for an attack query which is not known. The fixed query may be a trivial attack strategy and may not aim for attack success. Instead, it may only be used in the optimization procedure and may act as a lower bound for potential attack queries. The fixed target context may be specified to be semantically distinct from the original context.

The above optimization objective is solvable. However, directly calculating an optimized proxy context embedding for each original context in large datasets might be computationally complex. To scale to massive datastores, the computation of the optimized proxy context embedding can be approximated by means of a proxy generator neural network which can be trained by a training method comprising:
- providing an original context dataset including a plurality of original contexts;
- computing for each original context of the context dataset a corresponding original context embedding;
- computing for each original context embedding a corresponding optimized proxy context embedding by a method described above;
- providing training data including pairs of original context embeddings and corresponding proxy context embeddings;
- training the proxy generator neural network to learn mapping the original context embeddings to the optimized proxy context embeddings.

The training can be performed by solving: ${arg min}_{η} \frac{1}{\left|ℂ\right|} {\sum }_{C ∈ ℂ} {\left|{g}_{η}\left({ϕ}_{C}\right)-{{ϕ}^{˜}}_{C}\right|}_{2}^{2} ,$ wherein *η* denotes parameters of the proxy generator neural network, 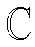 the original context dataset, *C* an original context of the original context dataset 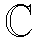 , *g_{η}* the proxy generator neural network, *φ_{C}* an original context embedding, and *ϕ̃_{C}* an optimized proxy context embedding.

Once trained, *g_{η}* can generate proxy embeddings in a single forward pass, eliminating per-context optimization. For critical or outlier contexts where the proxy generator's predictions underperform (e.g., low-confidence embeddings detected via anomaly scores), a lightweight fine-tuning step can refine the proxy context embeddings using the below expression: ${arg min}_{{{ϕ}^{˜}}_{C}} \left[\frac{1}{\left|ℚ\right|}{\sum }_{Q ∈ ℚ} L \left(f\left({ϕ}_{Q}, {ϕ}_{C}\right),f\left({ϕ}_{Q}, {{ϕ}^{˜}}_{C}\right)\right) + L \left(f\left({ϕ}_{Q ′}, {{ϕ}^{˜}}_{C}\right),{C}^{˜}\right)\right] ,$ which was discussed above.

In this way, robustness can be ensured without sacrificing scalability.

The training of the proxy generator model can also be combined with the above expression: ${arg min}_{{{ϕ}^{˜}}_{C}} \left[\frac{1}{\left|ℚ\right|}{\sum }_{Q ∈ ℚ} L \left(f\left({ϕ}_{Q}, {ϕ}_{C}\right),f\left({ϕ}_{Q}, {{ϕ}^{˜}}_{C}\right)\right) + L \left(f\left({ϕ}_{Q ′}, {{ϕ}^{˜}}_{C}\right),{C}^{˜}\right)\right] .$ by solving: ${arg min}_{η} \left[\frac{1}{\left|{D}_{qc}\right|}{\sum }_{Q , C ∈ {D}_{qc}} L \left(f\left({ϕ}_{Q}, {ϕ}_{C}\right),f\left({ϕ}_{Q},{g}_{η}\left({ϕ}_{C}\right)\right)\right) + L \left(f\left({ϕ}_{Q ′},{g}_{η}\left({ϕ}_{C}\right)\right),{C}^{˜}\right)\right] .$

Here, ${D}_{qc}$ denotes a dataset comprising pairs of contexts and their corresponding queries, *C* an original context, *Q* a query, *ϕ_{Q}* an embedding of the query *Q*, *ϕ_{C}* an embedding of the original context, *ϕ_{Q'}* an embedding of the fixed query, *g_{η}*(*ϕ_{C}*) a mapping of an original context embedding by the proxy generator neural network, *C̃* a fixed target context, and 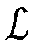 a cross-entropy loss.

In a second aspect of the present disclosure, a data processing apparatus is provided comprising means configured to perform a method described above.

In a third aspect of the present disclosure, a computer program is provided comprising instructions which, when the program is executed by a computer, cause the computer to perform a previously described method.

In a fourth aspect of the present disclosure, a computer-readable storage medium is provided comprising instructions which, when executed by a computer, cause the computer to carry out a previously described method.

The present disclosure will be described in detail in the following with reference to the accompanying drawings. In the drawings:
Figure 1 is a schematic diagram showing an example of a RAG enhanced LLM.
Figure 2 is a flow diagram of an exemplary method according to the present disclosure.
Figure 3 is a schematic drawing of an exemplary data processing apparatus according to the present disclosure.

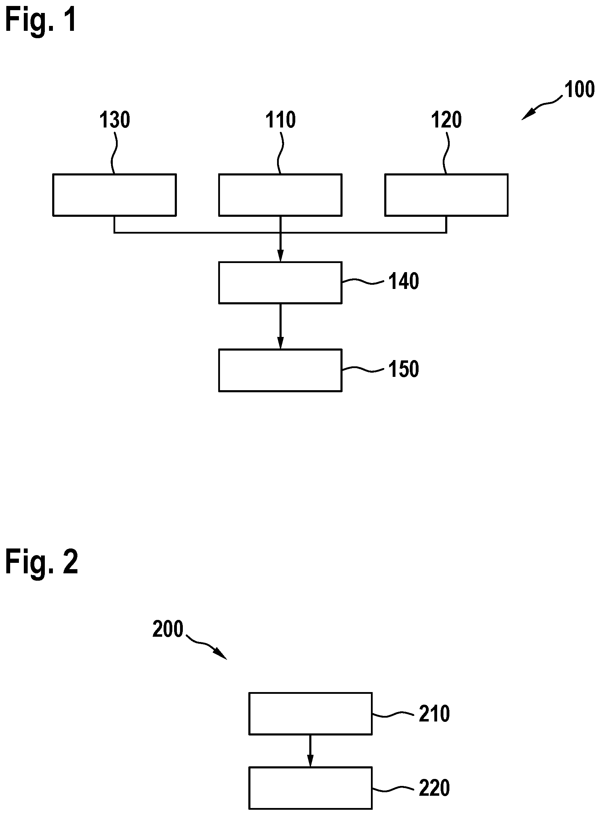

Figure 1 is a schematic diagram showing an example of a large language model (LLM) enhanced by retrieval-augmented generation (RAG) which will be subsequently referred to as RAG system 100.

Retrieval-augmented generation refers to an approach in large language models that integrates information retrieval with text generation. In this method, the RAG system 100 retrieves, upon receipt of a user query 110 relevant information 120 from an external knowledge base or corpus. The user query 110, the retrieved information 120, and a system prompt 130 are synthesized into a coherent prompt to which a large language model 140 is tasked with formulating a response 150. By combining retrieval-based techniques with generative capabilities, RAG improves the accuracy, relevance, and factuality of the model's output, particularly for tasks requiring specialized or up-to-date knowledge.

In RAG setups where privacy-relevant or confidential information is used to ground the RAG generation phase, retrieved contexts should be protected and not accessible to RAG users. This applies in particular to RAG context extraction attacks that target RAG-enhanced systems to reconstruct or expose proprietary knowledge bases, document repositories, or contextual data used for response generation. Attackers exploit model outputs through iterative or adversarial queries to infer the structure, content, or sources of retrieved contexts. Successful attacks compromise intellectual property, enable data laundering, or facilitate circumvention of access controls for restricted materials.

A method of defending attacks of this kind will be explained in the following on the basis of an exemplary question-answering RAG system.

The operation of RAG systems in general, and of question-answering RAG systems in particular employ the embedding of text, prompts, and queries into a latent space. A tokenization and embedding function is denoted here by *h*(·). This function maps a text *X* to its embedding $h \left(X\right) = {ϕ}_{X} ∈ {ℝ}^{e \times {n}_{X}}$, where *n_{X}* is the token length and *e* is the embedding size.

Let *P* be the system prompt template designed to guide the LLM toward a desired answer *A* given a user query *Q* and a retrieved context *C* or *k* retrieved contexts ${\left\{{C}_{i}\right\}}_{i = 1}^{k}$ (*k* being an integer). The embeddings of *P*, *Q*, *C* are denoted as *ϕ_{P}*, *ϕ_{Q}*, and *ϕ_{C}*, respectively. The retrieved contexts are obtained as ${\left\{{C}_{i}\right\}}_{i = 1}^{k} =$ $r \left(Q, {\left\{{C}_{i}\right\}}_{i = 1}^{K}\right)$, where *r* is a retriever function selecting relevant contexts from a larger set ${\left\{{C}_{i}\right\}}_{i = 1}^{K}$ (*K* being an integer, with *K* ≥ *k*) based on embedding similarity or BM25 ranking.

The LLM, parameterized by weights *θ*, generates an answer *Â* given *P*, *Q*, and ${\left\{{C}_{i}\right\}}_{i = 1}^{k}$. This process is represented as: $\hat{A} = {f}_{θ} \left({ϕ}_{P}, {ϕ}_{Q}, {\left\{{ϕ}_{{C}_{i}}\right\}}_{i = 1}^{k}\right) =$ $f \left({ϕ}_{Q}, {\left\{{ϕ}_{{C}_{i}}\right\}}_{i = 1}^{k}\right)$, where *θ* and *ϕ_{P}* are omitted for brevity, as they remain fixed.

In such a setup, the attacker's objective is to extract the context set ${\left\{{C}_{i}\right\}}_{i = 1}^{K}$ or a semantically equivalent version by issuing carefully designed attack queries *Qₐ* to the RAG system 100. The attacker aims to maximize the attack success metrics such as n-gram overlap or semantic similarity between the answer *Âₐ* and the retrieved contexts given attack query *Qₐ*. The attacker operates without access to: the system prompt template *P*, context sets ${\left\{{C}_{i}\right\}}_{i = 1}^{K}$, the LLM function and parameters *f_{θ}*(·), the embedding function *h*(*·*), the retriever function *r*(·), the relevant query *Q* that the RAG system 100 is designed to handle, as well as the desired response *A*.

The defender's objective is to implement countermeasures against RAG context extraction while preserving the utility of the context. The secured answer to a query *Q* is represented as *Ã* after applying the countermeasures. Thus, the goals are: (i) utility preservation: ensuring that *Ã* retains the intended functionality of *A* on a test dataset ${D}_{test} = {\left\{\left({Q}_{i}, {A}_{i}\right)\right\}}_{i = 1}^{M}$ specific to the task (*M* being an integer), and (ii) extraction prevention: ensuring that the extracted contexts in answer *Aₐ* significantly deviates from the real retrieved context ${\left\{{C}_{i}\right\}}_{i = 1}^{k}$. The defender has access to the model function and parameters *f_{θ}*(·), tokenization and embedding function *h*(*·*), retriever function *r*(·), and the system prompt template *P*. However, they cannot distinguish between malicious and benign queries, and lack prior knowledge of the attacker's strategy.

According to the present disclosure, a method for context extraction defense in a RAG enhanced LLM is provided that replaces original context with proxy context that preserves the original context's functionality.

Figure 2 is a flow diagram of an exemplary method 200 for defending context extraction in a large language model enhanced by retrieval-augmented generation. The method 200 comprises:
- computing 210 for an original context embedding an optimized proxy context embedding that:
   - minimizes a difference between a response generated by the large language model to a regular query based on the original context embedding and a response generated by the large language model to the regular query on the basis of the optimized proxy context embedding, and
   - maximizes a difference between a response generated by the large language model to an attack query based on the optimized proxy context embedding and an original context; and
- generating 220 a response to an input query by the large language model on the basis of the optimized proxy context embedding.

The above method can be applied to each context *C* in the set of original contexts ${\left\{{C}_{i}\right\}}_{i = 1}^{K}$.

The defense method will be explained in detail in the following. Based on the original contexts *C* and their embeddings *ϕ_{C}*, the defender wants to obtain a new context embedding *ϕ̃_{C}* that: (1) minimizes the response difference between the original context *C* and the context proxy under regular operating conditions, and at the same time (2) maximizes the dissimilarity between the model answers under an attack query *Qₐ* and the context *C*. To this end, the defender disposes of a set of *N* queries *Q* that are representative of the intended usage of the context (*N* being an integer). Such queries can be synthesized using the LLM given the context as reference. With this notation, the first objective can be written as: $\frac{1}{\left|ℚ\right|} {\sum }_{Q ∈ ℚ} L \left(f\left({ϕ}_{Q}, {ϕ}_{C}\right),f\left({ϕ}_{Q}, {{ϕ}^{˜}}_{C}\right)\right) ,$ where 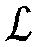 is the cross-entropy loss. The difference between the original prompt and the model response to attacker queries can be maximized by minimizing the negative cross entropy loss between these values as 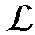 (*f*(*ϕ_{Qₐ}*, *ϕ̃_{C}*), *C*). The two objectives of the defender can be combined into one optimization problem as follows: ${arg min}_{{{ϕ}^{˜}}_{C}} \left[{{\frac{1}{\left|ℚ\right|} {\sum }_{Q ∈ ℚ} L \left(f\left({ϕ}_{Q}, {ϕ}_{C}\right),f\left({ϕ}_{Q}, {{ϕ}^{˜}}_{C}\right)\right)}^{︷}}^{\left(1\right) Utility preservation}-{{L \left(f\left({ϕ}_{{Q}_{a}}, {{ϕ}^{˜}}_{C}\right),C\right)}^{︷}}^{\left(2\right) Extraction prevention}\right] .$

The defender cannot directly solve the above optimization problem because they lack access to the attack query *Qₐ*. Instead, they can use a fixed query *Q'* as a proxy for the attack query *Qₐ. Q'* may be a trivial attack strategy and may not aim for attack success; instead, it may only be used by the defender in the optimization procedure and may act as a lower bound for potential attacker queries. The above optimization problem can be rewritten as: ${arg min}_{{{ϕ}^{˜}}_{C}} \left[\frac{1}{\left|ℚ\right|}{\sum }_{Q ∈ ℚ} L \left(f\left({ϕ}_{Q}, {ϕ}_{C}\right),f\left({ϕ}_{Q}, {{ϕ}^{˜}}_{C}\right)\right) - L \left(f\left({ϕ}_{Q ′}, {{ϕ}^{˜}}_{C}\right),C\right)\right] .$

Minimizing the negative cross-entropy loss at the token level between the answer given *Q'* and the original context *C* may not ensure semantic dissimilarity. To meet this requirement, the loss between the answer and a fixed target context *C̃*, which is specified by the defender to be semantically distinct, e.g., "Stop stealing the contexts!", may be minimized instead. The final joint objective, i.e. final optimization problem, may be defined as follows: ${arg min}_{{{ϕ}^{˜}}_{C}} \left[\frac{1}{\left|ℚ\right|}{\sum }_{Q ∈ ℚ} L \left(f\left({ϕ}_{Q}, {ϕ}_{C}\right),f\left({ϕ}_{Q}, {{ϕ}^{˜}}_{C}\right)\right) + L \left(f\left({ϕ}_{Q ′}, {{ϕ}^{˜}}_{C}\right),{C}^{˜}\right)\right] .$

The final optimization problem defined above is solvable by the defender based on the information they have available. However, directly optimizing *ϕ̃_{C}* for each context *C* in large datasets might be computationally complex, as even a single optimization step can take minutes for fine-grained control. To scale context proxy to massive datastores, a proxy generator neural network *g*_{η} can be used that learns to approximate the optimized proxy embeddings *ϕ̃_{C}* for any input context *C*.

The proxy generator neural network *g*_{η} can be trained to act as a differentiable approximation of the original optimization, inheriting its security guarantees while achieving low latency per context.

The proxy generator neural network *g*_{η} can be trained on the basis of a training dataset ${\left\{\left({ϕ}_{{C}_{i}}, {{ϕ}^{˜}}_{{C}_{i}}\right)\right\}}_{i = 1}^{M}$ generated from a given a dataset of original contexts $ℂ =$ ${\left\{{C}_{i}\right\}}_{i = 1}^{M}$ and including pairs of original context embeddings ϕ*_{Cᵢ}* and their corresponding optimized proxy context embeddings ϕ̃*_{Cᵢ}* computed by solving the above final optimization problem. Here, *M* is an integer and denotes the total number of pairs in the dataset. The proxy generator neural network *g*_{η} learns to map the original context embeddings ϕ*_{Cᵢ}* to the corresponding proxy context embeddings ϕ̃*_{Cᵢ}*. The proxy generator neural network *g*_{η} is trained by solving: ${arg min}_{η} \frac{1}{\left|ℂ\right|} {\sum }_{C ∈ ℂ} {\left|{g}_{η}\left({ϕ}_{C}\right)-{{ϕ}^{˜}}_{C}\right|}_{2}^{2} ,$ wherein *η* denotes parameters of the proxy generator neural network *g_{η}*, 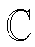 the original context dataset, and *C* an original context of the original context dataset 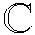 .

Once trained, *g_{η}* generates optimized proxy context embeddings in a single forward pass, eliminating per-context optimization. For critical or outlier contexts where the proxy generator's predictions underperform (e.g., low-confidence embeddings detected via anomaly scores), a lightweight fine-tuning step can refine the proxy context embeddings using the above final optimization problem, ensuring robustness without sacrificing scalability.

The optimization of such proxy generator model can also be combined with the above final optimization problem, e.g. as follows: ${arg min}_{η} \left[\frac{1}{\left|{D}_{qc}\right|}{\sum }_{Q , C ∈ {D}_{qc}} L \left(f\left({ϕ}_{Q}, {ϕ}_{C}\right),f\left({ϕ}_{Q},{g}_{η}\left({ϕ}_{C}\right)\right)\right) + L \left(f\left({ϕ}_{Q ′},{g}_{η}\left({ϕ}_{C}\right)\right),{C}^{˜}\right)\right] .$

Here, ${D}_{qc} = {\left\{\left({Q}_{i}, {C}_{i}\right)\right\}}_{i = 1}^{N}$ denotes a dataset comprising *N* pairs of contexts *Cᵢ* and their corresponding queries *Qᵢ*, with *N* being an integer.

The method according to the present disclosure may be employed in a diagnostic RAG system. Such a system may be configured to make medical diagnoses in response to query including a patient's symptoms. In such a system, a user might input for example the following query: "Whenever I move my head or stand up quickly, the room starts spinning violently. I feel nauseous but can't vomit, and lying still eases it." In response to such a query, context data can be retrieved from a patient database storing symptoms and corresponding diagnoses, in association with private patient data like name and age. A relevant context retrieved in response to the exemplary symptoms above might be: "Patient (John Doe, 45 years old): Room spins when moving; Doctor: Likely benign paroxysmal positional vertigo (BPPV)".

For data protection reasons, it is of the utmost importance to protect the private patient data like name and age from unauthorized access and to only forward the diagnosis data to the LLM when answering the request. This can be achieved by the method according to the present disclosure by generating the optimized proxy context embedding which is then combined with the query and a system prompt (e.g., "Please answer the query based on the retrieved context.") into a coherent prompt that is forwarded to the LLM and tasked with formulating a response. The LLM may output the following response: "You may be experiencing benign paroxysmal positional vertigo (BPPV)." which is similar to the diagnostic data stored in the database, but hides the private patient data stored in the database.

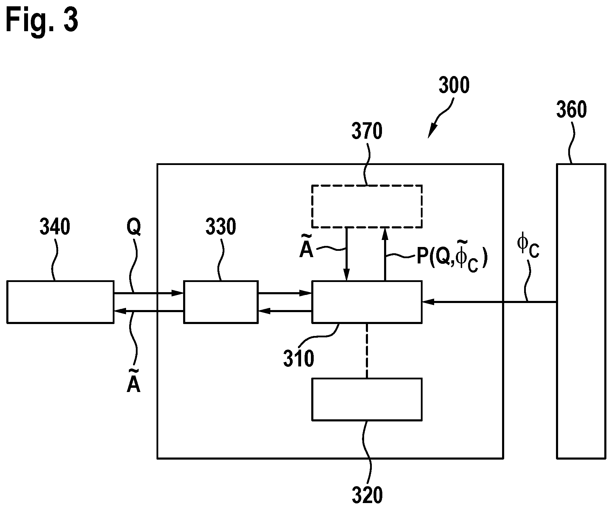

The method according to the present disclosure can be implemented by a data processing apparatus 300 schematically shown in Figure 3. The data processing apparatus 300 may include a processing device 310 and a computer-readable storage medium 320 connected to the processing device 310. The processing device 310 may include or may be configured as one or more general-purpose processing devices such as a processor, or as one or more special-purpose processing devices such as an application specific integrated circuit (ASIC), a field programmable gate array (FPGA) and the like. The computer-readable storage medium 320 may include or may be configured as a read-only memory (ROM), a random-access memory (RAM) and the like.

A computer program may be stored in the computer-readable storage medium 320 including instructions that can be executed by the processing device 310, i.e. a computer. The instructions included in the computer program may cause the processing device 310 to carry out the above-described method.

The data processing apparatus 300 may include an input/output unit 330 configured to receive and process a query *Q* input by a user 340 and to forward the processed query *Q* to the processing device 310. Upon receipt of the query, the processing device 310 may retrieve relevant original context from a context database 360 storing a set of contexts.

The context may be stored in an embedded form in the database 360 as original context embeddings *ϕ_{C}*. In such a case, the processing device 310 may be configured to retrieve relevant original context embeddings *ϕ_{C}* from the database 360 and to calculate the optimized context embeddings *ϕ̃_{C}* as described above.

Alternatively, the database 360 may store original context *C* as raw data. In such a case, the processing device 310 may be configured to first carry out an embedding of the raw data into a latent space using an embeddings function *h*(·) and to then calculate the optimized context embeddings *ϕ̃_{C}* as described above.

The processing device 310 may then synthesize a coherent prompt P on the basis of the input query *Q* and the optimized context embeddings *ϕ̃_{C}*, and input this prompt *P* into a large language model 370. The large language model 370 may be implemented by the processing device 310 by carrying out the instructions stored in the storage medium 320. The large language model 370 may be configured to generate a secured answer *Ã* to the input query *Q* on the basis of the optimized proxy context embeddings *ϕ̃_{C}.* The response secured answer *Ã* may then be output to the user 340 via the input/output unit 330.

## Claims

1. A computer-implemented method (200) for defending context extraction in a large language model (370) enhanced by retrieval-augmented generation, the method (200) comprising:
- computing (210) for an original context embedding (*ϕ_{C}*) an optimized proxy context embedding (*ϕ̃_{C}*) that:
- minimizes a difference between a response generated by the large language model (370) to a regular query based on the original context embedding (*ϕ_{C}*) and a response generated by the large language model (370) to the regular query on the basis of the optimized proxy context embedding *ϕ̃_{C}*, and
- maximizes a difference between a response generated by the large language model (370) to an attack query based on the optimized proxy context embedding *ϕ̃_{C}* and an original context, and
- generating (220) a response to an input query by the large language model (370) on the basis of the optimized proxy context embedding (*ϕ̃_{C}*).

2. The method (200) of claim 1, wherein the computation (210) of the optimized proxy context embedding (*ϕ̃_{C}*) is performed by:
- minimizing a cross-entropy loss between a response generated by the large language model (370) on the basis of an original context embedding (*ϕ_{C}*) to a predetermined set of queries that are representative of the intended usage of the original context and a response generated by the large language model (370) on the basis of a proxy context embedding (*ϕ̃_{C}*) to said predetermined set of queries, and
- minimizing a cross-entropy loss between a response generated by the large language model (370) on the basis of a proxy context embedding (*ϕ̃_{C}*) to a fixed query and a fixed target context.

3. The method (200) of claim 2, wherein the optimized proxy context embedding (*ϕ̃_{C}*) is computed by solving the following optimization problem: ${arg min}_{{{ϕ}^{˜}}_{C}} \left[\frac{1}{\left|ℚ\right|}{\sum }_{Q ∈ ℚ} L \left(f\left({ϕ}_{Q}, {ϕ}_{C}\right),f\left({ϕ}_{Q}, {{ϕ}^{˜}}_{C}\right)\right) + L \left(f\left({ϕ}_{Q ′}, {{ϕ}^{˜}}_{C}\right),{C}^{˜}\right)\right] ,$ wherein *C* denotes the original context, 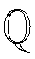 the predetermined set of queries, *Q* a query of the set of queries 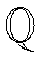 , *ϕ_{Q}* an embedding of the query *Q*, *ϕ_{C}* an embedding of the original context *C*, *ϕ_{Q'}* an embedding of the fixed query, *ϕ̃_{C}* a proxy context embedding, *C̃* the fixed target context, and 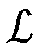 the cross-entropy loss.

4. The method (200) of claim 2 or 3, wherein the queries of the set of queries are synthesized by means of the large language model (370) using the original context as a reference.

5. The method (200) of claim 3 or of claims 3 and 4, wherein the computation of the optimized proxy context embedding (*ϕ̃_{C}*) is approximated by means of a proxy generator neural network which is trained by a training method comprising:
- providing an original context dataset including a plurality of original contexts;
- computing for each original context of the context dataset of a corresponding original context embedding;
- computing for each original context embedding a corresponding proxy context embedding by solving the optimization problem defined in claim 3;
- providing training data including pairs of original context embeddings and corresponding proxy context embeddings;
- training the proxy generator neural network to learn mapping the original context embeddings to the optimized proxy context embeddings.

6. The method (200) of claim 5, wherein the training is performed by solving: ${arg min}_{η} \frac{1}{\left|ℂ\right|} {\sum }_{C ∈ ℂ} {\left|{g}_{η}\left({ϕ}_{C}\right)-{{ϕ}^{˜}}_{C}\right|}_{2}^{2} ,$ wherein *η* denotes parameters of the proxy generator, 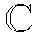 the original context dataset, *C* an original context of the original context dataset 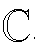 , *g_{η}* the proxy generator neural network, *ϕ_{C}* an original context embedding, and *ϕ̃_{C}* a proxy context embedding.

7. The method (200) of claim 5, wherein training is performed by solving: ${arg min}_{η} \left[\frac{1}{\left|{D}_{qc}\right|}{\sum }_{Q , C ∈ {D}_{qc}} L \left(f\left({ϕ}_{Q}, {ϕ}_{C}\right),f\left({ϕ}_{Q},{g}_{η}\left({ϕ}_{C}\right)\right)\right) + L \left(f\left({ϕ}_{Q ′},{g}_{η}\left({ϕ}_{C}\right)\right),{C}^{˜}\right)\right] ,$ wherein ${D}_{qc}$ denotes a dataset comprising pairs of contexts and their corresponding queries, *C* an original context, *Q* a query, *ϕ_{Q}* an embedding of the query *Q*, *ϕ_{C}* an embedding of the original context, *ϕ_{Q'}* an embedding of the fixed query, *g_{η}*(*ϕ_{C}*) a mapping of an original context embedding by the proxy generator neural network, *C̃* a fixed target context, and 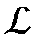 a cross-entropy loss.

8. A data processing apparatus (300) comprising means (310) configured to perform a method according to any one of claims 1 to 7.

9. A computer program comprising instructions which, when the program is executed by a computer (310), cause the computer (310) to perform a method (200) according to any one of claims 1 to 7.

10. Computer-readable storage medium (320) comprising instructions which, when executed by a computer (310), cause the computer (310) to carry out a method (200) according to any one of claims 1 to 7.
